# EUROPEAN PATENT SPECIFICATION

(11) **EP 4 110 108 B1**
(45) Date of publication and mention of the grant of the patent: **03.04.2024**
(21) Application number: 21704826.3
(22) Date of filing: 17.02.2021
(51) Int. Cl.: A24F 40/20, A24F 40/50

(54) **HEAT-NOT-BURN AEROSOL-GENERATING DEVICE COMPRISING MEANS FOR AUTHENTICATING AN AEROSOL-GENERATING ARTICLE BY INTERNAL ILLUMINATION THEREOF**
VORRICHTUNG ZUR ERZEUGUNG EINES AEROSOLS DURCH ERHITZEN STATT VERBRENNEN MIT MITTELN ZUR AUTHENTIFIZIERUNG EINES AEROSOLERZEUGENDEN ARTIKELS DURCH INNERE BELEUCHTUNG DAVON
DISPOSITIF DE GÉNÉRATION D'AÉROSOL À CHAUFFAGE SANS COMBUSTION COMPRENANT UN MOYEN D'AUTHENTIFICATION D'UN ARTICLE DE GÉNÉRATION D'AÉROSOL PAR SON ÉCLAIRAGE INTERNE

(30) Priority: 26.02.2020 EP 20159602
(43) Date of publication of application: 04.01.2023
(73) Proprietor: JT International S.A., 1202 Geneva (CH)
(72) Inventor: DEBERGH, Patrick, 2088 Cressier (CH)
(74) Representative: Bovard SA Neuchâtel
(86) International application number: PCT/EP2021/053848
(87) International publication number: WO 2021/170465

(56) References cited:
- WO-A1-2015/082560
- WO-A1-2016/096927
- WO-A1-2016/162446
- WO-A1-2018/050701
- WO-A1-2019/129378

## Description

### Technical field of the invention

The present invention relates to the field of aerosol-generating articles and devices, in particular to heat-not-burn articles and devices.

### Background of the invention

Electronic cigarettes and vaporizers have gained popularity in the recent years. There are mainly two types: liquid vaporizers, which produce an inhalable vapour or aerosol by heating of a liquid vaporizable substrate such as an e-liquid or gel, and heat-not-burn devices, which generate an aerosol upon heating of a tobacco containing aerosol-generating consumable article inserted in the device. Heat-not-burn systems are meant to provide a more authentic tobacco flavour and taste than flavoured liquid-generated aerosols. Their working principle is to heat a material, such as tobacco, comprising an aerosol-forming substance (such as glycerine or propylene glycol) which vaporises during heating and creates a vapour that extracts nicotine and flavour components from the tobacco material. The substance is heated to between 200 and 400°C, which is below the normal burning temperatures of a conventional cigarette. A heat-not-burn device is typically a hand-held device comprising an inner chamber, which is configured to receive consumable articles such as tobacco-rod consumables and heating means to heat the consumable article internally/or externally when the consumable article is inserted in the chamber to generate an inhalable aerosol. The heating means are electrically powered by means of a rechargeable battery arranged in the device, and both heating means and battery are electronically controlled by an electronic control arrangement comprising sensors, circuitry and often, ICs and/or microprocessors.

To ensure compatibility of a given aerosol-generating article with a given heat-not-burn device and/or authenticity of an aerosol-generating article, it has so far been proposed to provide an indicium containing information about the article, arranged on its outer surface, which indicium can be read upon insertion in a correspondingly designed heat-not-burn device having reading means, or through external reading, for instance using a separate reader such as a handheld terminal or smartphone. In some cases, said indicium may also contain information about parameters a heat-not-burn device shall be set to for proper consumption of the article, such as the ideal temperature range, or the heating profile in function of time.

Existing optically readable indicia rely mostly on classic codes such as barcodes of 2D or 3D types. Other types of indicia comprise information codes that are contained in arrays of individual elements having sizes less than 100µm or even less than 1µm, so that the details are very difficult to observe with the unaided human eye. The individual elements may be formed of for example: ink, holes, embossing, cavities, or microstructures such as diffractive structures.

All optically readable indicia rely on the use of a light source that is fit for providing a light beam that is directed onto at least a portion of the indicia. The interaction of a light beam with an indicium provides at least one secondary light beam that may be a reflected and/or a diffracted light beam emitted by part of the indicium at least.

Existing heat-not-burn devices are compact devices in which it is difficult to arrange optical components, among which detectors and light sources. When an aerosol-generating consumable article is inserted into an aerosol-generating device not much room is available to arrange an illumination light source, in addition to the other optical components of an optical reader.

In addition, indicia that are readable by illuminating them with simple light sources such as a LED are prone to be easily reproduced.

For example, the aerosol-generating device described in WO2018/050701 A1 comprises a light source that is arranged at the periphery of the cavity of the device that receives an article, and on a support. The light source in WO2018/050701 A1 is adapted to illuminate light onto a wrapper of an article, from the periphery and thus from the outside of an article and to excite luminescent material incorporated in the wrapper of the article.

So, there is a need to identify other illumination solutions compatible with the limited available space in the devices and which at the same time make reproduction of the optical effects of the indicia applied on aerosol-generating articles more difficult to identify and to reproduce. More specifically there is a need that an individual aerosol-generating article cannot be easily identified outside an aerosol-generating device designed for use with such article.

### Summary of the invention

The inventors of the present invention have found solutions to the above-discussed problems by providing an aerosol-generating device that has an an optical light source extending in a cavity of such device.

In a first aspect the invention relates to an aerosol-generating device comprising a power supply section and a cavity arranged in an outer body part. The cavity has an opening accessible at the outer body part and is configured to receive an aerosol-generating article upon insertion of the consumable segment of said article, at least in said cavity. The aerosol-generating device further comprises an optical light source extending in said cavity from an end thereof, opposite said opening, such that said light source penetrates said consumable portion of the aerosol-generating article upon insertion thereof in in said cavity. The aerosol-generating device further comprises an optical reader system

By using a light source which extends in a cavity of the aerosol-generating device such that said light source penetrates said consumable portion of the aerosol-generating article upon insertion thereof in the cavity, indicia may be provided on articles such that light sources placed outside the aerosol-generating article are not required, and providing large design flexibility of such indicia. Furthermore, such indicia are difficult to recognize and to reproduce.

In an embodiment said light source comprises a waveguide. Using waveguides allows arranging a light source away from the aerosol-generating article so that on the one hand no electrical parts are introduced inside the consumable product and on the other hand provides design flexibility so that electrical parts of the light source are placed in available space in the aerosol-generating device, in particular outside the cavity.

In an embodiment said light source comprises an illuminating extremity being one of: a diffusor, a V-shaped illuminating tip, a ball shaped illuminating tip, a metallic reflector tip, a conical -shaped tip. Different shapes of illuminating tips provide different possible properties of the illuminating light beam that illuminates the indicium arranged on an outer surface of the aerosol-generating product. The illuminating light beam provided by the tip may be a convergent or divergent light beam or may be a diffuse light beam or may be a light beam that is constituted of a plurality of differently shaped light beams

In an embodiment said illuminating extremity comprises and electrically addressable light source, preferably a LED light source. Arranging a light source such as a LED directly inside an aerosol-generating article allows to provide an arrangement that is easy to realize as it does not require additional optical components besides the electrically addressable light source.

In an embodiment said light source comprises a light collecting waveguide. Using a light collecting waveguide in proximity of said light source allows to collect information on the aerosol-generating substance located close to the light source, for example close to said illuminating extremity.

In a second aspect, the invention relates to an aerosol-generating article comprising a consumable segment, comprising a charge of aerosol-generating material, preferably arranged in a wrapper. A mouthpiece segment may be attached at a first end of the consumable segment. When the aerosol-generating article comprises a mouthpiece segment both the consumable segment and mouthpiece segment may extend, but not necessarily, along a common longitudinal axis. The aerosol-generating article comprises at least one indicium arranged in at least a portion of the article, the portion being at least partially transparent to light having a wavelength of between 200nm and 25µm.

In an embodiment said portion of the article comprising the indicium comprises at least two distinct transmission bands, each of said transmission bands being centred at a wavelength between 200nm (UV) and 25µm (Infrared).

In an embodiment said indicium extends over at least 25%, preferably at least 50% of the circumference of said portion. An indicium extending along an important of the circumference of an article provides solutions that makes the sensing of indicia by an optical reader arrangement less dependent or even independent of the particular orientation of the article within the aerosol-generating device.

In an embodiment said indicium comprises at least one code constituted by structures arranged in or on said wrapper.

In an advantageous embodiment said code comprises apertures in said wrapper. Using apertures as the elements of a code provides to improve the intensity of the detected light and/or also the contrast of the image of a code provided by the optical reader system.

In an embodiment said code comprises mesas arranged in or on said wrapper. In variants, said mesas are made of an optically opaque material, preferably a metal or an ink. Depositing mesas, such as dots, allows providing solutions that are easily implemented in a production process.

In an embodiment said indicium comprises an array of optical structures, of which at least two structures have different transmission properties. Using more than one optical structure in an indicium allows to complexify the indicium so that the reading thereof becomes more complicated so that reproduction of the code is made more difficult.

In an embodiment said array of optical structures are bands having different transmission properties. Arranging an optical code along bands having different transmission properties is well adapted to an online production process.

In an embodiment at least one of said bands has a sinusoidal shape and/or wherein at least one of said bands comprises an array of linear strips. Providing predetermined shapes of bands comprising optical codes allows to make the reading becomes more complicated so that reproduction of the code is made more difficult.

In a third aspect, the invention further relates to an aerosol-generating system comprising an aerosol-generating device and an aerosol generating article as previously described.

In an embodiment of the aerosol-generating system, an illuminating extremity of the light source is arranged to extend in the aerosol-generating article and to be longitudinally level with the authentication part thereof when said article is inserted in the cavity until the end of said cavity.

### Brief description of the drawings

Figure 1 shows a schematic representation of a partial longitudinal cross section of an aerosol-generating device comprising an illumination system inserted partially in an aerosol-generating article.
Figure 2 shows a schematic representation of a partial longitudinal cross section of an aerosol-generating device comprising an illumination system inserted partially close to an inner surface of an aerosol-generating article.
Figure 3 shows a schematic representation of a partial longitudinal cross section of an aerosol-generating device comprising an illumination system inserted partially in an aerosol-generating article, the extremity of the illumination system comprising a light coupler comprising a light injection portion and two light guiding branches.
Figure 4 shows a schematic representation of a partial longitudinal cross section of an aerosol-generating device comprising an illumination system comprising two separate lightguides that may be inserted according to different depths in an aerosol generation article.
Figure 5 shows a schematic representation of a partial longitudinal cross section of an aerosol-generating device comprising an illumination system that is configured to illuminate, from the inside of an aerosol-generating article, two different indicia arranged in the article.
Figures 6-10 shows a schematic representation of different embodiments of extremities of light guiding elements for an illumination system of an aerosol-generating device according to the invention, that are fit to be introduced inside an aerosol-generating article.
Figure 11 shows a schematic perspective representation of an optical magnification reader system comprising an optical projection system adapted to project light provided by an indicium that is illuminated from the inside of an aerosol-generating article.
Figure 12 shows a variant of the embodiment of Fig.11 wherein an indicium comprising three different codes is illuminated from the inside of an aerosol-generating article by three different sections of a light guide inserted in an aerosol-generating article.
Figure 13 shows a schematic representation of a partial longitudinal cross section of an aerosol-generating device comprising an illumination system inserted partially in an aerosol-generating article, without being in contact with the article.
Figure 14 shows a schematic representation of a partial longitudinal cross section of an aerosol-generating device comprising an illumination system inserted in an aerosol-generating article, so that the light emitting portion is situated outside the aerosol-generating substance of the article.
Figure 15 shows a schematic representation of a partial longitudinal cross section of an aerosol-generating device comprising an illumination system inserted in an aerosol-generating article, so that two opposing indicia are illuminated and provide a superposition of optical information by each of the indicia.
Figure 16 shows a schematic representation of a partial longitudinal cross section of an aerosol-generating device comprising an illumination system inserted in an aerosol-generating article and a light detection system that is inserted partially into the aerosol-generating substance of the article, and in proximity of the emitting part of the illumination system.
Figure 17 shows a schematic representation of a partial longitudinal cross section of an aerosol-generating device comprising means to trigger a light source embedded in an aerosol-generating article without needing a mechanical or electrical connection to that light source.
Figure 18 shows an embodiment wherein the aerosol-generating substance comprises a plurality of light re-emitting elements or compounds.
Figure 19 shows an exemplary embodiment of a light guide that is introduced in an aerosol-generating article, the light source comprising a light emitting extremity and comprising a waveguide to direct backscattered light to a detector system situated outside the article.

### Detailed description of the invention

The present invention will be described with respect to particular embodiments and with reference to the appended drawings, but the invention is not limited thereto. The drawings described are only schematic and are nonlimiting. In the drawings, the size of some of the elements may be exaggerated and not drawn on scale for illustrative purposes.

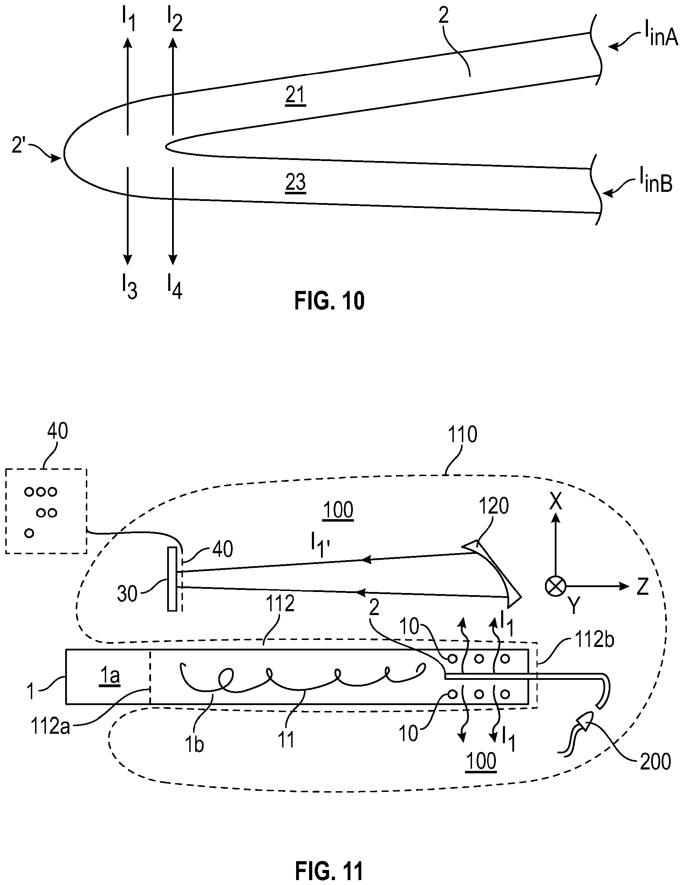

Fig.11 represents an aerosol-generating device 100 for the aerosol-generating system according to the invention. This aerosol-generating device 100 comprises an outer body part 110, wherein a power supply section and a cavity 112 are arranged. The cavity 112, defining a Z-axis of insertion of an aerosol-generating article 1 as previously described, has an opening 112a accessible at the outer body part 110. The aerosol-generating device 100 further comprises an optical light source 2 extending in said cavity 112 from an end 112b thereof opposite the opening 112a, such that said light source 2 penetrates the consumable portion 1b of the aerosol-generating article 1 upon insertion thereof in in said cavity 112.

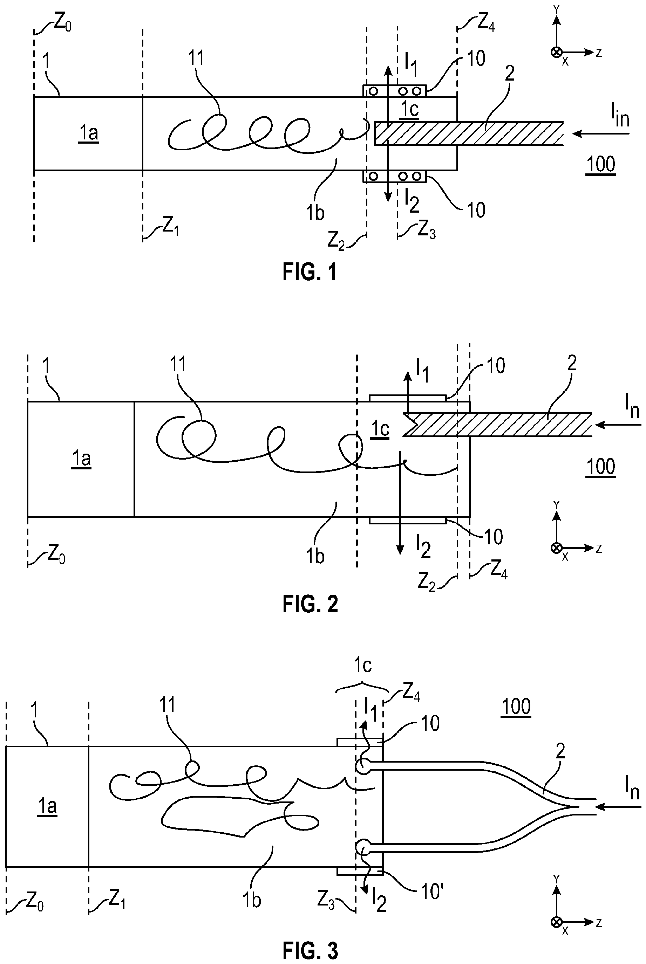

In variants, illustrated in Fig.1 to 3, the light source 2 may be arranged to be centred or decentred relative to a symmetry axis of the inserted aerosol-generating article 1.

In the invention a light source 2 is defined as an optical system that is part of the aerosol-generating device 100 and that is arranged to provide at least one light beam from the inside of an aerosol-generating consumable article 1 inserted in said aerosol generating device 100.

As visible in Fig. 11, the aerosol-generating device 100 further comprises an optical reader system arranged in the outer body part 110 and configured to read the at least one indicium 10, 10' upon illumination from the inside of the aerosol-generating article, preferably from the inside of the consumable segment 1b of the aerosol-generating article 1. The aerosol-generating device 100 further comprises a control unit (not shown in the drawings) configured control and command the illumination from the light source 2 and the optical reader system at least, to authenticate the article upon reading of said indicium 10.

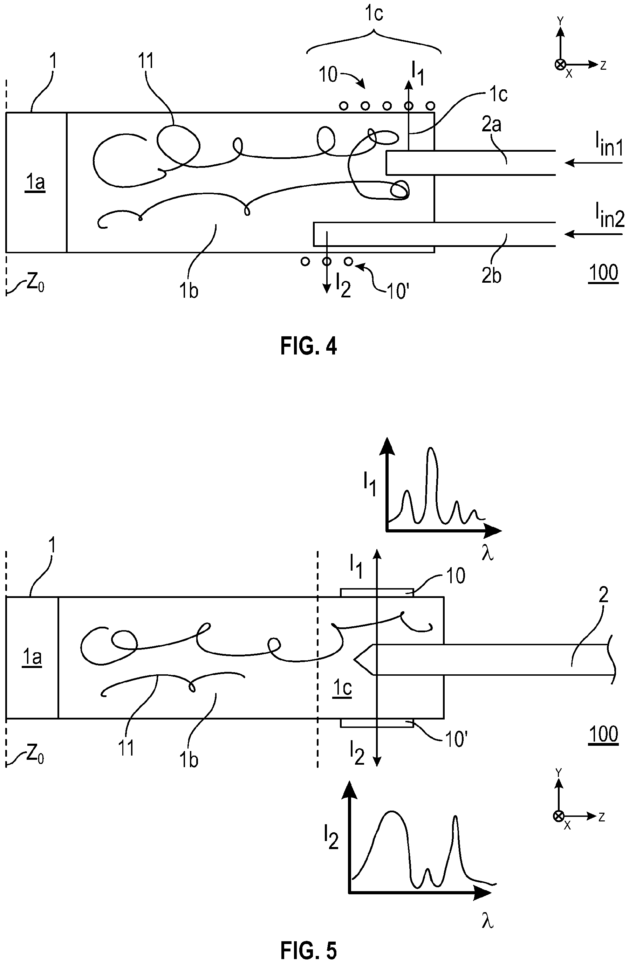

The light source 2 of the aerosol-generating device 1 comprises preferably a substantially rigid and sharp optical waveguide that provides an illumination light beam l1 inside the aerosol-generating substance 11. The optical waveguide may be configured to provide at least two light beams l1, l2 as illustrated in Figs.1-5. To that aim, the illuminating extremity 2' of the optical waveguide may have different shapes, providing different light emitting effects, as illustrated in the variants of the figures 1, 2, 5 and 6-10. In such embodiments, the illuminating extremity 2' may be one of: a diffusor, a V-shaped illuminating tip, a ball shaped illuminating tip, a metallic reflector tip, a conical-shaped tip. Alternatively, the two illuminating light beams l1, l2 may be generated by two illuminating heads of a bifurcated waveguide 2 as shown in figure 3 or by two distinct waveguides 2a, 2b inserted in the consumable segment 1b of an aerosol-generating article as represented in Fig. 4.

In variants, illustrated in Fig.5, a light source 2 may be configured to provide two different light beams l1, l2 that may illuminate, from the inside of an aerosol-generating article 1, two different indicia 10, 10', each indicium 10, 10' providing a different emitted light spectrum (l1-λ, l2-λ) to a detector (not illustrated).

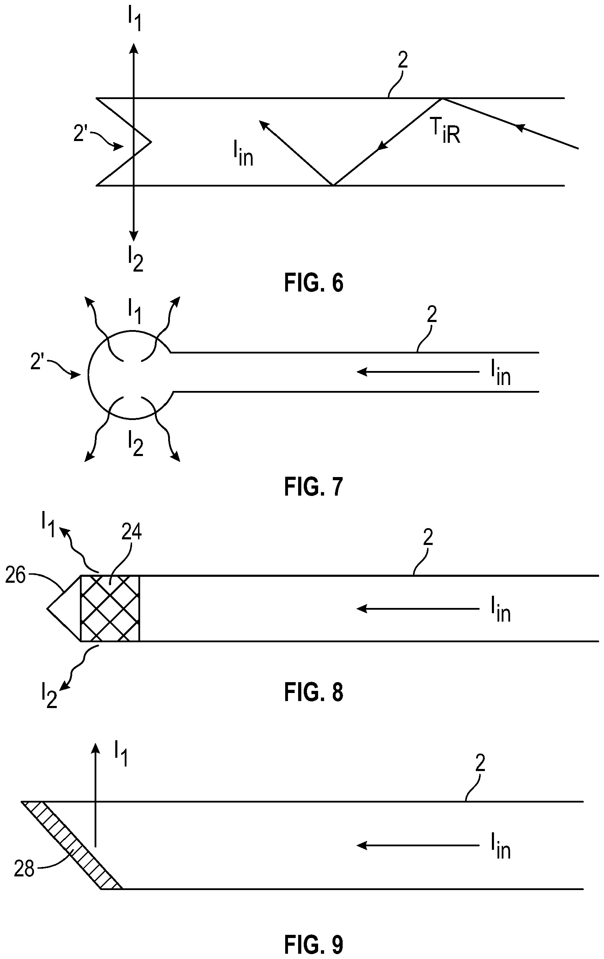

Fig.6 illustrates an extremity 2' comprising two wedges that are shaped to project, in operation, lateral light beams l1, l2 into predetermined directions. The light guide 2 is preferably a multimode light guide that may have a circular cross section or a square or rectangular or any other X-Y cross section, defined orthogonal to the Z-axis.

Fig.7 illustrates a spherical extremity 2' that provides, in operation, light beams l1, l2 into different directions, and may provide illumination to all directions surrounding the extremity 2'.

Fig.8 illustrates an extremity 2' that comprises a conical shaped end 26 and a light outcoupling element or structure 24. The conical shaped end may have only a mechanical function, for example to introduce the light element 20 with less force into a compact aerosol substance 11.

Fig.9 illustrates an extremity 2' variant that has a wedge-shaped reflector arranged to its end.

Fig.10 illustrates a variant of a light guide 2 having two light guiding portions 21, 23, each portion 21,23 guiding a lightbeam l_{inA}, l_{inB}. Such a variant may be used to provide for example two or more different light beams to the extremity 2', for example two different polarized light beams or light beams that have a different spectral distribution. The extremity 2' may be shaped so to provide inside the aerosol-generating article at least 4 different light beams l1-l4. In variants, the lightguide 2 may comprise a lateral outcoupling structure defined as an outcoupler. In embodiments a plurality of outcouplers may be arranged to at least one side of an illuminating waveguide 20.

In an embodiment said illuminating extremity 2' is an electrically addressable light source, preferably a LED light source.

The aerosol-generating device 100 may further comprise an optical magnification reader system comprising an optical projection system adapted to project light provided by an indicium 10 that is illuminated from the inside of an aerosol-generating article 1 by means of said light source 2. The projected light l1' may be focused on a virtual image plane 40, for example by a concave mirror 120. Fig.11 illustrates a dotted pattern that is imaged in said virtual image plane 40. The magnification factor provided by the magnification reader system may be higher than 2, preferably higher than 10. In variants the optical reader may be an image-size reduction system providing a projected image that is smaller than the indicium 10. Preferably the optical reader comprises a detector 30 arranged in contact or in proximity of an indicium 10, 10' or remotely therefrom as shown in Fig. 11. In the example of realization of Fig.11 a light source 200, preferably an LED, is arranged to an incoupling face of an optical fiber 2. Said LED light source may be a pulsed LED. In variants in which the emitted light intensity l1 out of the aerosol article is very low, lock-in detection means connecting said light source 200 and said detector 30 may be provided in said aerosol-generating device 100. In variants, not illustrated, the aerosol generating article 1 may comprise two different indicia 10, 10' and each indicium 10, 10' may be associated with a second, maybe different, optical magnification system.

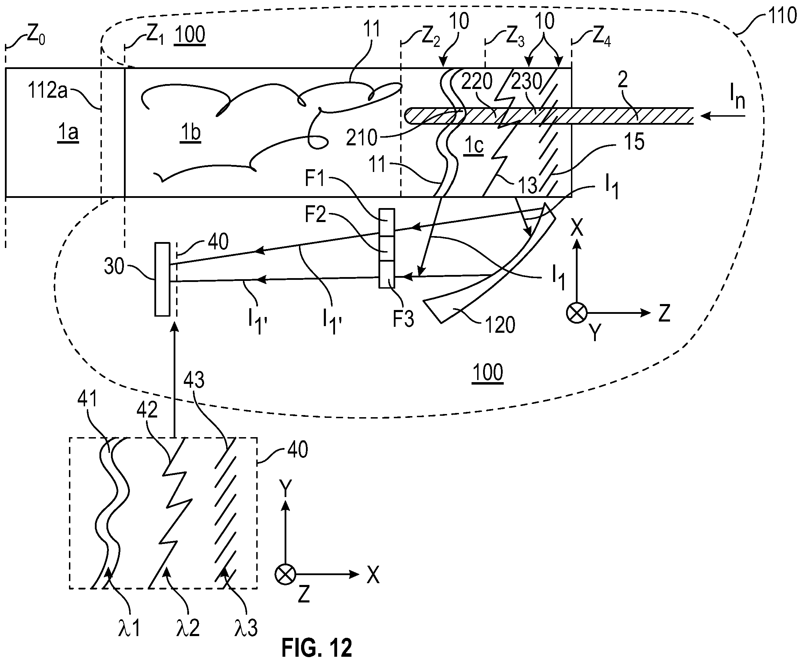

As illustrated in Fig.12, showing a variant of the configuration of Fig. 11, an indicium 10 may comprise a plurality of codes, here at least three different codes 11, 13, 15, that are illuminated from the inside of the aerosol-generating article 1 after insertion thereof in the cavity 112 of the aerosol-generating device 100 and penetration of the illumination light source 2 in an end segment 1c of the consumable segment 1b of the aerosol-generating article 1. The illumination of each code 11, 13, 15 may be provided by one of three different outcoupling sections 210, 220, 230 of a light guide 2, guiding a light beam lᵢₙ, inserted in the aerosol-generating article 1. The light beam l1 issuing from segment 1c of the article 1 through the outer surface thereof and the indicium 10 impinge on a mirror 120 focusing the reflected light, possibly through optical filtersF1, F2, F3, onto a virtual image plane 40. The focused light beam l1' form images 41-43 of the codes 11, 13, 15 of the indicium 10 into an image plane 40 located at the detection face of a detector 30. The shaped and intensities of said images 41- 43 are detected by for example an array of detectors or the images are imaged by a detector (imager) 30 that may comprise image analysis means. In the example of Fig.11 each code 11, 13, 15 of the indicium 10 is configured to provide 3 different images 41-43 that have a different narrow-band or broad-band spectral content, illustrated by the wavelength symbols λ1, λ2, λ3.

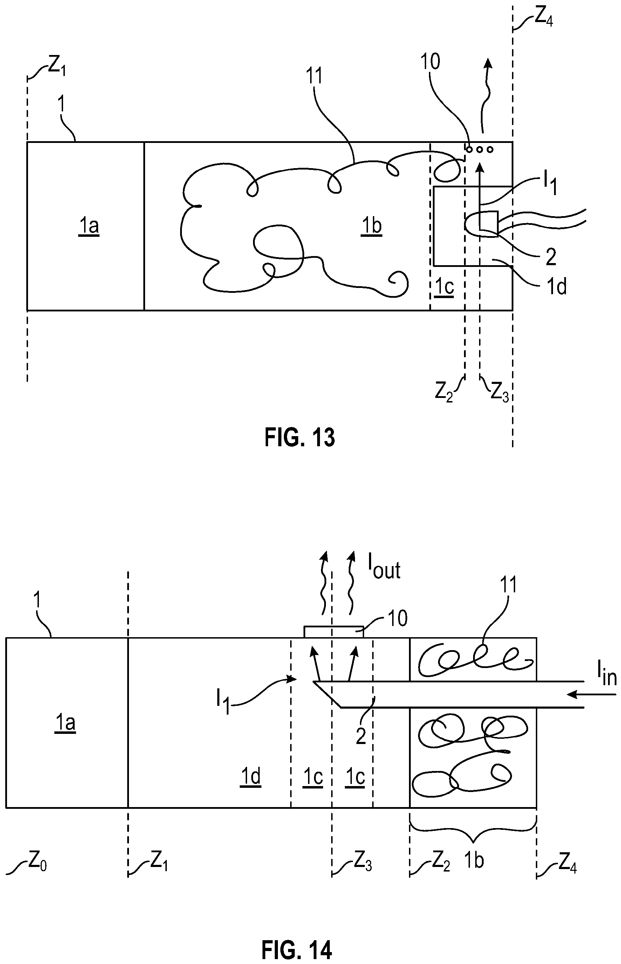

Figure 13 shows a schematic representation of an advantageous variant of the aerosol-generating system according to the invention, wherein the illumination system of the aerosol-generating device 100 comprise a light source 2 arranged for insertion in an opening 1d at the free end of an aerosol-generating consumable segment 1b of the article 1 designed therefor. Thus, the illuminating light source 2 may be inserted in the article 1 without being in contact therewith. The light source 2 in the embodiment of Fig.13 is situated at a position Z=Z3 that is centred to an indicium 10 positioned between Z=Z2 and Z=Z4 which is the position of an extremity of the aerosol-generating article 1.

Figure 14 shows a further embodiment of an aerosol-generating device 100 comprising an illumination light source 2 inserted in an aerosol-generating article 1, so that the light emitting portion is situated outside the aerosol-generating substance 11 of the article1. The embodiment of Fig.14 may be useful when the segment 1b containing aerosol-generating substance 11 is not transparent to the incident light beam l1. In that case, the light emitter's extremity 2' may be pushed to the section of the article 1 that has at least partial transparency of the emitted light beam l1. For example, in an example of Fig.14 the light emitting tip 2' is pushed through the opaque aerosol-generating substance and illuminates from below an indicium 10 that is arranged to an at least partial transparent buffer or filter section 1d. The at least partial transparent buffer or filter section 1d may be constituted for example at least by paper sheets.

In variants of execution, the aerosol-generating system may be configured so that an illuminating extremity 2' of the light source 2 is arranged to extend in the aerosol-generating article 1 and to be longitudinally level with the authentication part 10 thereof when said article is inserted in the cavity 112 until the end 112b of said cavity 112. In the variant illustrated in Fig.14, the illuminating extremity 2' faces at least a portion of the indicium 10 so that at least one lateral cross section plane intersects with said indicium 10 and said extremity 2'.

In other variants, the light beam emitted by said extremity 2' may be emitted by an emission angle α different than 90° relative to the longitudinal axis of the cavity, so that so that no lateral cross section plane intersects at well with said indicium 10 as with said extremity 2'. In variants the central axis of the emitted light beam may have an angle α between 10° and 89°, preferably between 30° and 70°, even more preferably between 45° and 60°. The lower emission angles allow to illuminate, from the inside of the article 1, an indicium 10 that is at a longitudinal distance b, defined in the direction of the cavity axis from said illuminating extremity 2', of b = a/ tan(α), a being the radial distance of the extremity 2' to the wrapper surface, the radial distance a being defined orthogonal to the cavity axis .

In other variants, the light source 2 may have any curved shape and at least its extremity 2' may illuminate the outer surface of the article 1, from the inside of the article 1, under any angle between -90° and +90° relative to a normal to the longitudinal axis of the cavity 112.

In an embodiment the light source 2 may be configured so that it may be , during operation of the device, be retracted and re-inserted at least twice inside the article 1 so as to provide at least two different illuminations of the indicia, which may allow to improve the reliability of the illumination and detection of the indicium 10.

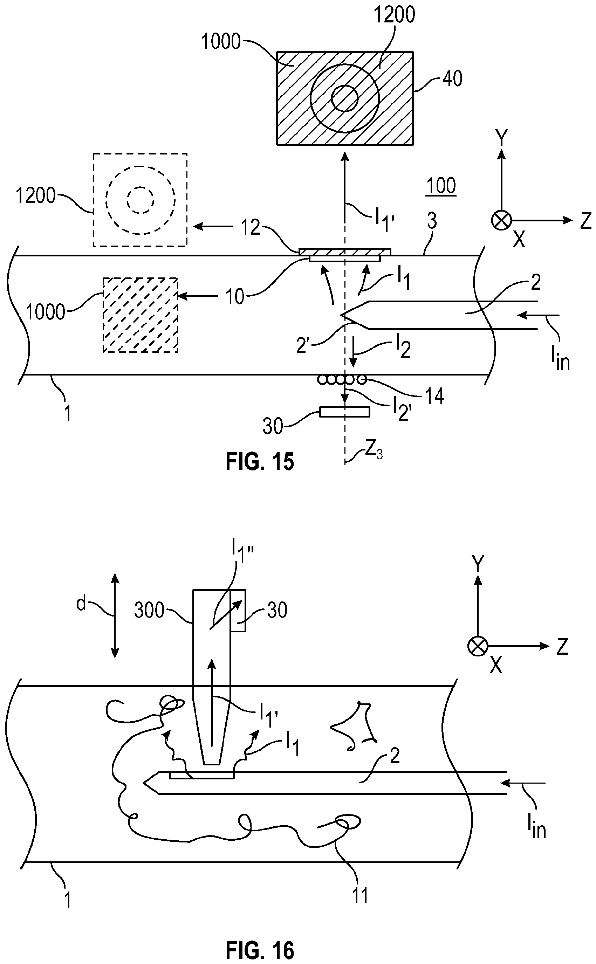

Figure 15 shows a further embodiment comprising an illumination system 2 inserted partially in an aerosol-generating article 1, so that two opposing indicia 10-12, 14 are illuminated by light beams l1, l2. Fig. 15 illustrates also the variant of two indicia 10, 12 that are arranged in proximity and to opposite sides of a wrapper 3 and provide an emitted light beam l1' that comprises the superposition of the optical information 1000, 1200 provided by the light beams by each of the indicia. The image plane 40 illustrated in Fig. 15 illustrates an example of the superposition of two different patterns from said two close indicia 10, 12.

Figure 16 shows an embodiment of an aerosol-generating device 100 comprising an illumination system 2 inserted in an aerosol-generating article 1 and a light detection system 300, 30 that is inserted partially into the aerosol-generating substance 11 of the article 1, and in proximity of the emitting part of the illumination system 2. The embodiment of Fig.16 may be useful in the case that the aerosol-generating substance is not very transparent for the illuminating light beam l1. By inserting, by a displacement length d, a lateral light collector 300 in proximity of the light emitting extremity 2', information may be collected about the optical properties of the aerosol-generating substance 11. In a variant, not illustrated, the light emitting element 2 may include a light collection element, that may be the same of another light guide, configured to collect, at the proximity of the light tip 2' retro-diffused light, providing information on the optical properties of the aerosol-generating substance in the neighbourhood of the light emitting tip 2'.

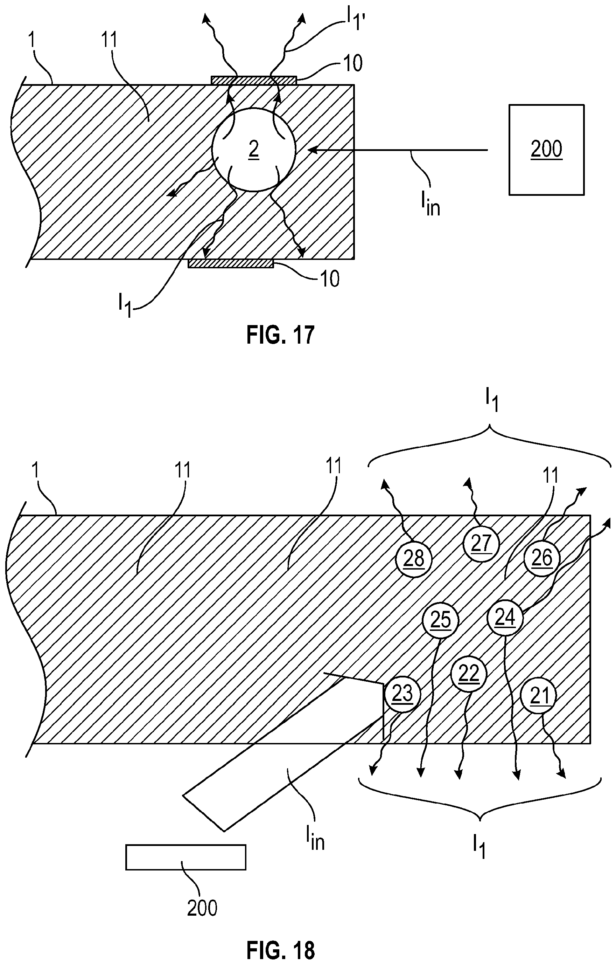

In an advantageous embodiment illustrated in Figure 17, an aerosol-generating device 100 comprises means to trigger a light generating source 2 that is imbedded in an aerosol-generating article 1 without needing a mechanical or electrical connection to that light source. Fig.17 illustrates an example wherein an external light source 200 provides light lᵢₙ to a substance that scatters the light or converts the incident light into emitted light having another wavelength. Fig.18 illustrates a variant of the embodiment of Fig.17 wherein the aerosol-generating substance comprises a plurality of light re-emitting elements or compounds 21-28.

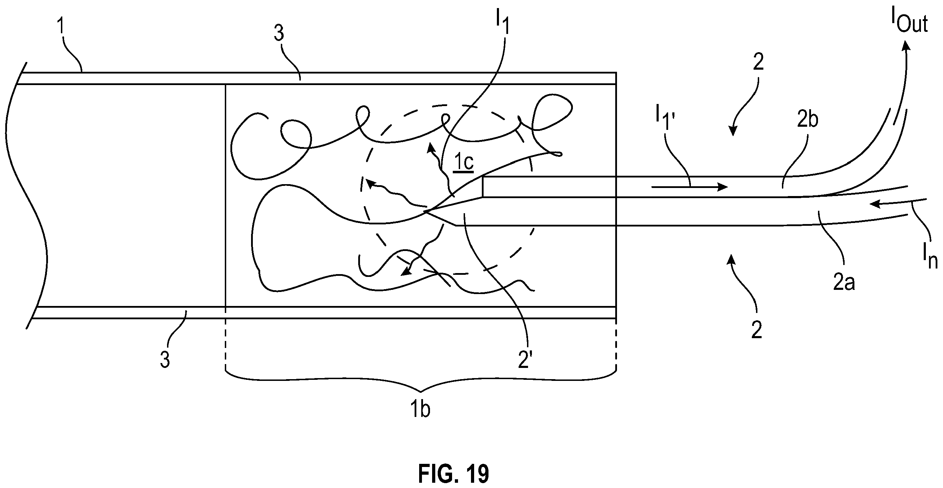

Figure 19 shows another advantageous embodiment of a light guide 2 configured to be introduced in an aerosol-generating article 1. The light guide 2comprises a light emitting guide 2a for guiding a light beam lᵢₙ and comprises a light emitting extremity 2'. To the light guide 2, a second waveguide 2bis arranged to collect and direct backscattered light 11' to provide an outputted light beam lₒᵤₜ a detector system situated outside the aerosol-generating article 1.

## Claims

1. An aerosol-generating device (100) comprising, arranged in an outer body part (110), a power supply section, an optical light source, an optical reader system and a cavity (112), the cavity (112) having an opening (112a) accessible at the outer body part and being configured to receive an aerosol-generating article (1),
wherein said optical light source is arranged to illuminate at least part of a said aerosol-generating article (1) inserted in said cavity through the opening (112a),
and said optical reader system is arranged to detect light issuing from the aerosol-generating article after illumination by the light source,
**characterized in that** the light source extends in said cavity (112) from an end thereof opposite the opening (112a) to penetrate at least partly said aerosol-generating article (1) upon insertion in the cavity (112) and illuminate the said part of it from inside the aerosol-generating article (1).

2. The aerosol-generating device (100) according to claim 1, wherein said light source (2) comprises a waveguide.

3. The aerosol-generating device (100) according to claim 1 or claim 2, wherein said light source (2) comprises an illuminating extremity (2') being one of: a diffusor, a V-shaped illuminating tip, a ball shaped illuminating tip, a metallic reflector tip, a conical shaped tip.

4. The aerosol-generating device (100) according to claim 3, wherein said illuminating extremity (2') comprises an electrically addressable light source, preferably a LED light source.

5. The aerosol-generating device (100) according to any one of claims 1 to 4, wherein said light source 2 comprises a light collecting waveguide (2b).

6. An aerosol-generating article (1) comprising a consumable segment (1b) comprising a charge of aerosol-generating material (11) and a mouthpiece segment (1a) attached at a first end of the consumable segment,
wherein
at least one indicium (10, 10', 12, 12') is arranged in or on at least an authentication portion (1c) of said aerosol-generating article (1), at least a part of said authentication portion (1c) being at least partially transparent to light having a wavelength of between 200nm and 25µm,
such that said indicium (10, 10', 12, 12') is readable with an optical reader system upon illumination with light from inside the aerosol-generating article (1).

7. An aerosol-generating article according to claim 6, wherein said authentication portion (1c) comprises at least two distinct transmission bands, each of said transmission bands being centred at a wavelength between 200nm and 25µm.

8. The aerosol-generating article according to claim 6 or claim 7, wherein said indicium (10, 10', 12, 12') extends over at least 25%, preferably at least 50% of the circumference of said authentication portion (1c).

9. The aerosol-generating article according to any one of claim 6 to 8, wherein said indicium (10, 10', 12, 12') comprises at least one code constituted by structures arranged in or on said wrapper.

10. The aerosol-generating article according to claim 9, wherein said code comprises apertures in said wrapper.

11. The aerosol-generating article according to claim 9 or claim 10, wherein said code comprises mesas in said wrapper.

12. The aerosol-generating article according to claim 11, wherein said mesas are made of an optically opaque material, preferably a metal or ink.

13. The aerosol-generating article according to any one of claims 6 to 12, wherein said indicium (10, 10', 12, 12') comprises an array of optical structures, of which at least two structures have different transmission properties, preferably bands having different transmission properties.

14. The aerosol-generating article according to claim 13, wherein the array of optical structures comprises bands and at least one of said bands has a sinusoidal shape and/or wherein at least one of said bands comprises an array of linear strips.

15. An aerosol-generating system, comprising an aerosol-generating device (100) according to any one of claims 1 to 5, and an aerosol generating article according to any one of claims 6 to 14.

16. An aerosol-generating system according to claim 15, wherein an illuminating extremity (2') of the light source (2) is arranged to extend in the aerosol-generating article (1) and to be longitudinally level with the authentication part (10) thereof when said article is inserted in the cavity until the end (112b) of said cavity (112).

## Patentansprüche

1. Aerosolerzeugende Vorrichtung (100), umfassend, angeordnet in einem äußeren Körperteil (110), einen Stromversorgungsabschnitt, eine optische Lichtquelle, ein optisches Lesesystem und einen Hohlraum (112), wobei der Hohlraum (112) eine Öffnung (112a) aufweist, die am äußeren Körperteil zugänglich und dazu ausgestaltet ist, einen aerosolerzeugenden Artikel (1) aufzunehmen,
wobei die optische Lichtquelle dazu eingerichtet ist, zumindest einen Teil des aerosolerzeugenden Artikels (1) zu beleuchten, der in den Hohlraum durch die Öffnung (112a) eingesetzt wird,
und wobei das optische Lesesystem dazu eingerichtet ist, Licht zu erfassen, das von dem aerosolerzeugenden Artikel nach dem Beleuchten durch die Lichtquelle emittiert wird,
**dadurch gekennzeichnet, dass** sich die Lichtquelle von einem der Öffnung (112a) gegenüberliegenden Ende des Hohlraums (112) in diesen erstreckt, um den aerosolerzeugenden Artikel (1) beim Einsetzen in den Hohlraum (112) zumindest zu einem Teil zu durchdringen und diesen Teil von ihm aus dem Inneren des aerosolerzeugenden Artikels (1) heraus zu beleuchten.

2. Aerosolerzeugende Vorrichtung (100) nach Anspruch 1, wobei die Lichtquelle (2) einen Wellenleiter umfasst.

3. Aerosolerzeugende Vorrichtung (100) nach Anspruch 1 oder Anspruch 2, wobei die Lichtquelle (2) ein Beleuchtungsende (2') umfasst, das eines von Folgendem ist: ein Diffusor, eine V-förmige Beleuchtungsspitze, eine kugelförmige Beleuchtungsspitze, eine metallische Reflektorspitze, eine konisch geformte Spitze.

4. Aerosolerzeugende Vorrichtung (100) nach Anspruch 3, wobei das Beleuchtungsende (2') eine elektrisch adressierbare Lichtquelle, vorzugsweise eine LED-Lichtquelle, umfasst.

5. Aerosolerzeugende Vorrichtung (100) nach einem der Ansprüche 1 bis 4, wobei die Lichtquelle (2) einen lichtsammelnden Wellenleiter (2b) umfasst.

6. Aerosolerzeugender Artikel (1), umfassend ein verbrauchbares Segment (1b), das eine Ladung eines aerosolerzeugenden Materials (11) umfasst, und ein Mundstücksegment (1a), das an einem ersten Ende des verbrauchbaren Segments angebracht ist,
wobei
mindestens ein Zeichen (10, 10', 12, 12') in oder auf mindestens einem Authentifizierungsabschnitt (1c) des aerosolerzeugenden Artikels (1) angeordnet ist, wobei zumindest ein Teil des Authentifizierungsabschnitts (1c) zumindest teilweise transparent für Licht mit einer Wellenlänge zwischen 200nm und 25µm ist,
sodass das Zeichen (10, 10', 12, 12') bei Beleuchtung mit Licht aus dem Inneren des aerosolerzeugenden Artikels (1) mit einem optischen Lesesystem gelesen werden kann.

7. Aerosolerzeugender Artikel nach Anspruch 6, wobei der Authentifizierungsabschnitt (1c) mindestens zwei verschiedene Übertragungsbänder umfasst, wobei jedes dieser Übertragungsbänder auf eine Wellenlänge zwischen 200nm und 25µm zentriert ist.

8. Aerosolerzeugender Artikel nach Anspruch 6 oder Anspruch 7, wobei sich das Zeichen (10, 10', 12, 12') über mindestens 25%, vorzugsweise mindestens 50%, des Umfangs des Authentifizierungsabschnitts (1c) erstreckt.

9. Aerosolerzeugender Artikel nach einem der Ansprüche 6 bis 8, wobei das Zeichen (10, 10', 12, 12') mindestens einen Code umfasst, der von Strukturen gebildet wird, die in oder auf der Hülle angeordnet sind.

10. Aerosolerzeugender Artikel nach Anspruch 9, wobei der Code Öffnungen in der Hülle umfasst.

11. Aerosolerzeugender Artikel nach Anspruch 9 oder Anspruch 10, wobei der Code Mesa-Strukturen in der Hülle umfasst.

12. Aerosolerzeugender Artikel nach Anspruch 11, wobei die Mesa-Strukturen aus einem optisch opaken Material, vorzugsweise einem Metall oder einer Tinte, bestehen.

13. Aerosolerzeugender Artikel nach einem der Ansprüche 6 bis 12, wobei das Zeichen (10, 10', 12, 12') eine Anordnung optischer Strukturen umfasst, von denen mindestens zwei Strukturen unterschiedliche Übertragungseigenschaften, vorzugsweise Bänder mit unterschiedlichen Übertragungseigenschaften, aufweisen.

14. Aerosolerzeugender Artikel nach Anspruch 13, wobei die Anordnung optischer Strukturen Bänder umfasst und mindestens eines dieser Bänder eine sinusoidale Form aufweist und/oder wobei mindestens eines der Bänder eine Anordnung linearer Streifen umfasst.

15. Aerosolerzeugendes System, umfassend eine aerosolerzeugende Vorrichtung (100) nach einem der Ansprüche 1 bis 5 und einen aerosolerzeugenden Artikel nach einem der Ansprüche 6 bis 14.

16. Aerosolerzeugendes System nach Anspruch 15, wobei ein Beleuchtungsende (2') der Lichtquelle (2) derart angeordnet ist, dass es sich in den aerosolerzeugenden Artikel (1) erstreckt und in Längsrichtung auf gleicher Höhe wie dessen Authentifizierungsteil (10) ist, wenn der Artikel in den Hohlraum bis zum Ende (112b) dieses Hohlraums (112) eingesetzt ist.

## Revendications

1. Dispositif de génération d'aérosol (100) comprenant, agencés dans une partie de corps externe (110), une section d'alimentation électrique, une source de lumière optique, un système de lecteur optique et une cavité (112), la cavité (112) présentant une ouverture (112a) accessible au niveau de la partie de corps externe et conçue pour recevoir un article de génération d'aérosol (1),
ladite source de lumière optique étant agencée pour éclairer au moins une partie dudit article de génération d'aérosol (1) inséré dans ladite cavité à travers l'ouverture (112a), et ledit système de lecteur optique étant agencé pour détecter la lumière émise par l'article de génération d'aérosol après l'éclairage par la source de lumière,
**caractérisé en ce que** la source de lumière s'étend dans ladite cavité (112) à partir d'une extrémité de celle-ci opposée à l'ouverture (112a) afin de pénétrer au moins partiellement dans ledit article de génération d'aérosol (1) lors de l'insertion dans la cavité (112) et d'éclairer ladite partie de celui-ci depuis l'intérieur de l'article de génération d'aérosol (1).

2. Dispositif de génération d'aérosol (100) selon la revendication 1, ladite source de lumière (2) comprenant un guide d'ondes.

3. Dispositif de génération d'aérosol (100) selon la revendication 1 ou la revendication 2, ladite source de lumière (2) comprenant une extrémité d'éclairage (2') qui est l'un parmi : un diffuseur, une pointe d'éclairage en forme de V, une pointe d'éclairage en forme de bille, une pointe de réflecteur métallique, une pointe de forme conique.

4. Dispositif de génération d'aérosol (100) selon la revendication 3, ladite extrémité d'éclairage (2') comprenant une source de lumière adressable électriquement, de préférence une source de lumière à DEL.

5. Dispositif de génération d'aérosol (100) selon l'une quelconque des revendications 1 à 4, ladite source de lumière (2) comprenant un guide d'ondes (2b) de collecte de lumière.

6. Article de génération d'aérosol (1) comprenant un segment consommable (1b) comprenant une charge de matériau de génération d'aérosol (11) et un segment d'embout buccal (1a) fixé à une première extrémité du segment consommable, dans lequel
au moins un indice (10, 10', 12, 12') est agencé dans ou sur au moins une portion d'authentification (1c) dudit article de génération d'aérosol (1), au moins une partie de ladite portion d'authentification (1c) étant au moins partiellement transparente à la lumière présentant une longueur d'onde située entre 200 nm et 25 µm,
de telle sorte que ledit indice (10, 10', 12, 12') peut être lu à l'aide d'un système de lecteur optique lors de l'éclairage par de la lumière provenant de l'intérieur de l'article de génération d'aérosol (1).

7. Article de génération d'aérosol selon la revendication 6, ladite portion d'authentification (1c) comprenant au moins deux bandes de transmission distinctes, chacune desdites bandes de transmission étant centrée sur une longueur d'onde située entre 200 nm et 25 pm.

8. Article de génération d'aérosol selon la revendication 6 ou la revendication 7, ledit indice (10, 10', 12, 12') s'étendant sur au moins 25 %, de préférence au moins 50 % de la circonférence de ladite portion d'authentification (1c).

9. Article de génération d'aérosol selon l'une quelconque des revendications 6 à 8, ledit indice (10, 10', 12, 12') comprenant au moins un code constitué par des structures agencées dans ou sur ladite enveloppe.

10. Article de génération d'aérosol selon la revendication 9, ledit code comprenant des ouvertures dans ladite enveloppe.

11. Article de génération d'aérosol selon la revendication 9 ou la revendication 10, ledit code comprenant des mésas dans ladite enveloppe.

12. Article de génération d'aérosol selon la revendication 11, lesdits mésas étant constitués d'un matériau optiquement opaque, de préférence un métal ou une encre.

13. Article de génération d'aérosol selon l'une quelconque des revendications 6 à 12, ledit indice (10, 10', 12, 12') comprenant un réseau de structures optiques, dont au moins deux structures présentent des propriétés de transmission différentes, de préférence des bandes présentant des propriétés de transmission différentes.

14. Article de génération d'aérosol selon la revendication 13, le réseau de structures optiques comprenant des bandes et au moins l'une desdites bandes présentant une forme sinusoïdale et/ou au moins l'une desdites bandes comprenant un réseau de bandes linéaires.

15. Système de génération d'aérosol, comprenant un dispositif de génération d'aérosol (100) selon l'une quelconque des revendications 1 à 5 et un article de génération d'aérosol selon l'une quelconque des revendications 6 à 14.

16. Système de génération d'aérosol selon la revendication 15, une extrémité d'éclairage (2') de la source de lumière (2) étant agencée pour s'étendre dans l'article de génération d'aérosol (1) et pour être longitudinalement au niveau de sa partie d'authentification (10) lorsque ledit article est inséré dans la cavité jusqu'à l'extrémité (112b) de ladite cavité (112).
